# EUROPEAN PATENT APPLICATION

(11) **EP 1 096 591 A1**
(43) Date of publication of application: **02.05.2001**
(21) Application number: 00122498.9
(22) Date of filing: 14.10.2000
(51) Int. Cl.: H01M 10/40, B01D 71/68, B01D 71/38, B01D 71/34, B01D 71/42, H01M 4/62, H01M 2/16, H01G 9/02, C08J 5/22

(54) **Polymer electrolyte membrane for use in lithium batteries**

(30) Priority: 26.10.1999 EP 99121289; 28.10.1999 DE 19951872
(71) Applicant: MERCK PATENT GmbH, 64293 Darmstadt (DE)
(72) Inventor: Heider, Udo, Dr., 64560 Riedstadt (DE); Oesten, Rüdiger, Dr., 64331 Weiterstadt (DE); Scrosati, Bruno, Prof., 00198 Rom (IT); Croce, Fausto, co 137 Rom (IT)

(57) **Abstract**

The invention relates to gel-like membranes comprising ceramic materials and intended for electrochemical cells.

## Description

The invention relates to gel-like membranes comprising ceramic materials and intended for electrochemical cells.

Lithium ion batteries are among the most promising systems for mobile applications. The fields of use range from high-grade electronic equipment (e.g. mobile telephones, camcorders) to batteries for electrically driven motor vehicles.

These batteries consist of cathode, anode, separator and a nonaqueous electrolyte. Typical cathodes include Li(MnMe_{z})₂O₄, Li(CoMe_{z})O₂, Li(CoNiₓMe_{z})O₂ or other lithium intercalation and insertion compounds. Anodes can be of lithium metal, carbons, graphite, graphite carbons or other lithium intercalation and insertion compounds or alloys. As the electrolyte, use is made of solutions with lithium salts such as LiPF₆, LiBF₄, LiClO₄, LiAsF₆, LiCF₃SO₃, LiN(CF₃SO₂)₂ or LiC(CF₃SO₂)₃ and mixtures thereof in aprotic solvents.

Gel-like membranes obtained by immobilizing liquid lithium salt solutions (e.g. lithium salt dissolved in a mixture of organic solvents) in a polymer matrix (e.g. polyacrylonitrile) are known. JP 10284091 describes polymer membranes for lithium ion batteries, made from polyacrylonitrile (PAN) and polyvinylidene fluoride (PVDF). A prototype of a battery with an LiMn₂O₄ cathode, a graphite anode and a polyacrylonitrile-based electrolyte is described by Abraham et al. (Electrochim. Acta, 1998, 2399-2412). Such batteries have good conductivities at room temperature.

The membranes described have an ionic conductivity of the order of 10⁻³ S cm⁻¹ at room temperature. However, they are all characterized by poor chemical and mechanical stability at temperatures above room temperature.

The use of zeolites in gel-like membranes is described by Scrosati (Sold State Ionic Mater., 1994, 111-117). An investigation is carried out into the influence of the membrane on the lithium metal surface.

Ceramic powders such as γ-LiAlO₂ were added by Appetecchi et al. (J. Electrochem. Soc., 1998, 4126-4132) to a polyethylene oxide matrix in order to reduce the increasing passivation of the lithium. However, this mixture has two serious disadvantages. The optimum operating temperature, at 80°C, is too high, and the conductivity, at 0.6-1.0 10⁻⁴ S cm⁻¹, is much too low.

The object of the present invention is therefore to provide an electrolyte having improved stability and lithium ion conductivity.

The object of the invention is achieved by means of a polymer-based gel-like membrane, the polymer being selected from the group consisting of polyacrylonitrile, polymethyl methacrylate, polyvinyl chloride, polyvinyl sulfone, polyethylene glycol diacrylate, polyvinylpyrrolidone, polyvinylidene fluoride or mixtures thereof comprising ceramic material selected from the group consisting of aluminium oxide, silicon oxide, titanium oxide and zirconium oxide and mixtures thereof.

It has been found that the incorporation of nanocrystalline ceramic powders leads to an increase in the stability of the system. The nanocrystalline ceramic material is added in proportions of from 1 to 9% of the weight of the membrane, preferably between 5 and 7%.

All conventional conductive salts and solvents for electrochemical cells can be used as electrolytes. Electrolytes used can be solutions of LiPF₆, LiBF₄, LiClO₄, LiAsF₆, LiCF₃SO₃, LiN(CF₃SO₂)₂ or LiC(CF₃SO₂)₃ and mixtures thereof in aprotic solvents such as EC, DMC, PC, DEC, BC, VC, cyclopentanones, sulfolanes, DMS, 3-methyl-1,3-oxazolidin-2-one, γ-butyrolactone, EMC, MPC, BMC, EPC, BEC, DPC, 1,2-diethoxymethane, THF, 2-methyltetrahydrofuran, 1,3-dioxolane, methyl acetate, ethyl acetate and mixtures thereof.

A general example of the invention is illustrated below.

Depending on the composition of the conductive salt, two kinds of membranes are available in principle. Solutions of LiPF₆ or LiClO₄ in an ethylene carbonate/dimethyl carbonate (EC/DMC) mixture, or solutions of LiC(CF₃SO₂)₃ (lithium methide) in EC/DMC, are used.

Particularly suitable gel-like membranes are those based on polyacrylonitrile (PAN), polymethyl methacrylate (PMMA) or polyvinylidene fluoride (PVDF). Nanocrystalline ceramic materials are used. The use of Al₂O₃ is particularly preferred.

The conductivity is investigated using a membrane of polyacrylonitrile (PAN) with LiPF₆ as conductive salt and ethylene carbonate (EC) and dimethyl carbonate (DMC) as solvents. The conductivity of this membrane is measured at temperatures above room temperature, preferably between 40°C and 80°C, over a period of 1600 hours in comparison with a membrane comprising PAN, LiPF₆, EC/DMC with Al₂O₃. In the case of membranes without ceramic filler materials, severe degradation is found after 800 hours. In the case of the Al₂O₃-filled membranes, the conductivity is observed to remain constant.

These gel-like membranes can be used in electrochemical cells, preferably in batteries, with particular preference in lithium ion batteries.

## Claims

1. Polymer-based gel-like membrane, the polymer being selected from the group consisting of polyacrylonitrile, polymethyl methacrylate, polyvinyl chloride, polyvinyl sulfone, polyethylene glycol diacrylate, polyvinylpyrrolidone, polyvinylidene fluoride or mixtures thereof comprising ceramic material selected from the group consisting of aluminium oxide, silicon oxide, titanium oxide and zirconium oxide and mixtures thereof.

2. Membrane according to Claim 1, characterized in that it comprises nanocrystals.

3. Membrane according to Claims 1 and 2, characterized in that it comprises ceramic material in concentrations of between 1 and 9% of the weight of the membrane.

4. Membrane according to Claims 1 to 3, characterized in that the ceramic material is present in concentrations of between 5 and 7% of the weight of the membrane.

5. Membrane according to Claims 1 to 4, characterized in that polyacrylonitrile, polymethyl methacrylate, polyvinylidene fluoride or mixtures thereof are used as polymer matrix and aluminium oxide is used as ceramic material.

6. Use of gel-like membranes according to Claims 1 to 5 to stabilize conductivity at temperatures between 40°C and 80°C.

7. Use of the gel-like membranes according to Claims 1 to 5 in electrochemical cells.

8. Use of the gel-like membrane, according to Claim 7, in batteries, including secondary lithium batteries.
